# FASCICULE DE BREVET EUROPEEN

(11) **EP 1 480 876 B1**
(45) Date de publication et mention de la délivrance du brevet: **08.02.2006**
(21) Numéro de dépôt: 03720648.9
(22) Date de dépôt: 26.02.2003
(51) Int. Cl.: B64D 27/18, B64D 27/26

(54) **MAT D'ACCROCHAGE D'UN MOTEUR SOUS UNE VOILURE D'AERONEF**
AUFHÄNGUNG EINES TRIEBWERKS UNTER EINER FLUGZEUGTRAGFLÄCHE
ENGINE PYLON SUSPENSION ATTACHMENT OF AN ENGINE UNDER AN AIRCRAFT WING SECTION

(30) Priorité: 04.03.2002 FR 0202698
(43) Date de publication de la demande: 01.12.2004
(73) Titulaire: AIRBUS France, 31060 Toulouse Cedex 03 (FR)
(72) Inventeur: MARCHE, Hervé, F-31120 ROQUETTES (FR)
(74) Mandataire: Poulin, Gérard
(86) Numéro de dépôt international: PCT/FR2003/000626
(87) Numéro de publication internationale: WO 2003/074359

(56) Documents cités:
- EP-A- 0 437 868
- US-A- 3 831 888
- US-A- 4 560 122
- US-A- 5 806 792

## Description

### Domaine technique

L'invention concerne un mât apte à assurer l'accrochage ou la suspension d'un moteur sous une voilure d'un aéronef. Plus précisément, l'invention concerne un mât de structure originale, ainsi que le dispositif par lequel le mât est suspendu à la voilure.

Un tel dispositif peut être utilisé sur tout type d'aéronef comportant des moteurs suspendus sous la voilure par l'intermédiaire de mâts. Il est particulièrement adapté aux avions équipés de moteurs dont le diamètre est très grand relativement à l'espace disponible sous la voilure lorsque l'avion est au sol.

### Etat de la technique

Sur les avions existants, les moteurs sont suspendus en dessous de la voilure par des structures complexes, appelées "mâts". Le document US-A-5 806 792, par exemple, montre un mât d'accrochage d'un moteur selon le préambule de la revendication 1.

Ces structures sont notamment conçues pour permettre la transmission à la voilure des efforts statiques et dynamiques engendrés par les moteurs (poids, poussée, efforts aérodynamiques, etc.).

Sur les aéronefs existants, la structure des mâts est généralement de type "caisson", c'est-à-dire qu'elle est formée par l'assemblage de longerons inférieurs et supérieurs raccordés entre eux par un certain nombre de nervures. Pour ne pas affecter l'écoulement aérodynamique de l'air dans l'espace de faible hauteur qui sépare les moteurs de la voilure, on a l'habitude de donner aux mâts une largeur aussi faible que possible et de maintenir cette largeur constante sur toute la longueur du mât, de son extrémité avant jusqu'à son extrémité arrière.

La transmission des efforts entre le mât et la voilure est habituellement assurée par une attache avant, une attache arrière et un point intermédiaire de reprise des efforts.

L'attache avant comprend alors deux groupes de manilles respectivement placés verticalement de chaque côté du mât. Chaque groupe de manilles relie une ferrure à double tête solidaire des longerons supérieurs du mât à une ferrure à double tête solidaire d'un longeron avant de la voilure. Les liaisons entre les deux groupes de manilles et les ferrures sont assurées par des axes doublés, orientés selon une direction transversale par rapport à l'avion, c'est-à-dire selon une direction orthogonale à la fois à la verticale et à l'axe longitudinal de l'avion.

L'attache arrière comprend deux paires de manilles triangulaires placées dans un plan vertical orienté selon une direction transversale par rapport à l'avion. Ces deux paires de manilles relient une ferrure double solidaire du longeron supérieur arrière du mât à une ferrure solidaire d'un longeron intermédiaire de la voilure. Les liaisons entre les deux paires de manilles et les ferrures sont assurées par des rotules dont les axes sont orientés selon une direction longitudinale par rapport à l'avion.

Le point intermédiaire de reprise des efforts est matérialisé par une rotule d'axe vertical, fixée dans le longeron supérieur arrière du mât, et par un pion de cisaillement fixé sous la voilure, de façon à faire saillie verticalement dans la rotule.

Dans cet agencement classique, les efforts longitudinaux (poussée, inverseurs) sont transmis par le point intermédiaire de reprise des efforts. Les efforts transversaux se répartissent entre ce même point intermédiaire et l'attache arrière. Les efforts suivant la direction verticale passent par les attaches avant et arrière. Le moment selon l'axe longitudinal est repris par l'attache avant. Le moment selon l'axe transversal est repris dans la direction verticale par l'ensemble formé par les attaches avant et arrière. Enfin, le moment selon l'axe vertical est repris dans la direction transversale par l'ensemble formé par le point intermédiaire et l'attache arrière.

Sur les aéronefs existants, cet agencement permet de transmettre à la voilure les efforts statiques et dynamiques engendrés par le moteur dans les conditions normales de vol comme dans les conditions extrêmes.

Toutefois, il a pour inconvénient de présenter un encombrement important dans une direction verticale, du fait de la présence de manilles reliant des ferrures qui font saillie vers le haut au-dessus du mât et vers le bas en dessous de la voilure.

Cet inconvénient peut être préjudiciable si l'on décide d'équiper un avion existant de moteurs plus puissants, afin par exemple d'augmenter sa charge utile au décollage et/ou de diminuer sa consommation de carburant. En effet, des moteurs plus puissants ou à consommation réduite présentent généralement un diamètre accru. Compte tenu de l'encombrement des mâts existants dans la direction verticale, notamment au niveau des dispositifs assurant leur accrochage sous la voilure, il apparaît que l'implantation de moteurs de plus gros diamètre, est très limitée du fait de la diminution de la garde au sol des moteurs lorsque l'avion est posé.

Un autre problème concerne l'augmentation des efforts qui doivent être transmis à la voilure par le mât, du fait de la puissance et de la taille accrues des moteurs.

Pour assurer la transmission des efforts dans les conditions de sécurité requises, la structure du mât et de ses attaches devrait donc être redimensionnée pour tenir compte de l'augmentation des efforts à transmettre. Cela conduirait à un accroissement supplémentaire de la masse de l'avion, allant à l'encontre du but recherché.

### Exposé de l'invention

L'invention a précisément pour but de proposer un mât présentant une structure originale permettant d'utiliser un nouveau dispositif d'accrochage du mât sous la voilure apte à supporter un moteur plus lourd et de plus grand diamètre, tout en présentant une garde au sol satisfaisante et en transmettant par chacun des éléments du dispositif d'accrochage des charges qui restent acceptables par rapport à celles qui sont transmises par les dispositifs d'accrochage équipant les mâts existants.

L'invention a également pour but de proposer un mât original dont le dispositif d'accrochage permet d'implanter sur un avion existant un moteur plus lourd et de plus grand diamètre, en réduisant au minimum les modifications apportées à la voilure de l'avion.

Conformément à l'invention, ces différents objectifs sont atteints, au moins en partie, grâce à l'utilisation d'un mât d'accrochage d'un moteur sous une voilure d'aéronef, comprenant une structure rigide et des moyens d'accrochage de ladite structure sous la voilure, lesdits moyens d'accrochage comportant une attache avant, une attache arrière et un moyen de reprise des efforts, caractérisé en ce que la structure rigide comprend une partie arrière ayant une largeur qui augmente sensiblement en allant vers l'arrière, l'attache arrière comprenant deux ferrures arrière fixées sur la structure rigide, de façon à faire saillie latéralement de part et d'autre de celle-ci, dans une région arrière de ladite partie arrière, et au moins deux éléments de jonction reliant chacun l'une desdites ferrures arrière à une partie structurale de la voilure.

Dans cet agencement, l'élargissement progressif du mât dans sa partie arrière et le montage dans l'attache arrière des éléments de jonction, servant notamment à reprendre une partie des efforts transmis dans la direction verticale ainsi que le moment selon l'axe longitudinal, permettent d'augmenter sensiblement la distance entre lesdits éléments de jonction par rapport à l'art antérieur. Par conséquent, il devient possible de transférer des efforts beaucoup plus importants sans accroître sensiblement la taille des attaches. Des moteurs plus lourds et plus puissants peuvent ainsi être installés sous la voilure d'avions existants.

De plus, l'encombrement vertical du mât peut être réduit, ce qui autorise l'implantation de moteurs de plus grand diamètre tout en conservant une garde au sol acceptable.

Dans un premier mode de réalisation préféré de l'invention, qui favorise la réduction de l'encombrement vertical du mât, chacun des éléments de jonction comprend un premier axe d'articulation, une manille traversant un revêtement d'intrados de la voilure et un deuxième axe d'articulation parallèle au premier, le premier axe d'articulation reliant l'une des ferrures arrière à une extrémité inférieure de la manille et le deuxième axe d'articulation reliant une extrémité supérieure de la manille à la partie structurale de la voilure.

Dans ce cas, les deux axes d'articulation sont orientés, de préférence, selon une direction longitudinale du moteur.

Selon un deuxième mode de réalisation préféré de l'invention, chacun des éléments de jonction comprend un axe d'articulation, au moins une première pièce montée dans l'une des ferrures arrières de façon à pouvoir tourner autour d'un premier axe et une deuxième pièce montée dans un support fixé à la partie structurale de la voilure, sous un revêtement d'intrados de celle-ci, de façon à pouvoir tourner autour d'un deuxième axe, l'axe d'articulation traversant la première pièce et la deuxième pièce, le premier axe et le deuxième axe étant parallèles entre eux, décalés verticalement l'un par rapport à l'autre et orientés selon une direction longitudinale du moteur.

Par rapport au précédent, ce deuxième mode de réalisation de l'invention permet de supprimer tout évidement dans le revêtement d'intrados de la voilure. Ainsi, l'augmentation de la complexité et du coût de la voilure, les problèmes d'étanchéité du réservoir de carburant intégré dans la voilure et la diminution de la capacité de ce réservoir qui découlent de la présence d'évidements dans le revêtement d'intrados de la voilure sont supprimés.

Dans le deuxième mode de réalisation de l'invention, des moyens anti-rotation sont avantageusement prévus entre l'axe d'articulation et chacune des première et deuxième pièces, de façon à interdire toute rotation relative entre eux.

De préférence, selon un perfectionnement du deuxième mode de réalisation de l'invention, chacune des ferrures arrière a la forme d'une chape en U comportant deux plaques parallèles entre lesquelles est placé ledit support, une première pièce étant montée dans chacune des plaques de la ferrure arrière.

Avantageusement, deux premières pièces sont alors montées respectivement dans chacune des deux plaques de chaque ferrure arrière, lesdites premières pièces coopérant avec les deux plaques de la ferrure arrière par des surfaces en forme de portions de sphères définissant entre les plaques et lesdites pièces une liaison de type rotule.

Dans ce cas, des pièces intermédiaires formant cages de rotule peuvent être fixées dans chacune des deux plaques de la ferrure arrière. Ces pièces intermédiaires coopèrent alors par des surfaces intérieures en forme de portions de sphères avec des surfaces extérieures en forme de portion de sphères des premières pièces.

Dans un mode de réalisation de l'invention, par rapport à l'aéronef considéré dans son ensemble, l'un des éléments de jonction, dit "intérieur", est plus proche du fuselage que l'autre élément de jonction, dit "extérieur". Avantageusement, l'élément de jonction extérieur est alors plus proche que l'élément de jonction intérieur d'un plan vertical passant par un axe longitudinal du moteur.

Dans un mode de réalisation préféré, le moyen de reprise des efforts comprend avantageusement une rotule fixée à la partie arrière de la structure rigide, entre les deux ferrures, et un pion de cisaillement fixé à la voilure et traversant ladite rotule.

Dans ce cas, le pion de cisaillement est, de préférence, fixé à la partie structurale de la voilure et situé dans un plan vertical passant par un axe longitudinal du moteur.

Avantageusement, l'attache avant comprend une ferrure avant fixée à une région avant de ladite partie arrière, et un axe de montage de ladite ferrure avant sur la voilure, ledit axe de montage étant orienté selon une direction longitudinale.

Dans ce cas, l'axe de montage est fixé, de préférence, à un longeron avant de la voilure.

### Brève description des dessins

On décrira à présent, à titre d'exemples non limitatifs, deux modes de réalisation préférés de l'invention, en se référant aux dessins annexés, dans lesquels :
- la figure 1 est une vue de dessus qui représente schématiquement la structure rigide d'un mât conforme à l'invention, accrochée sous une aile d'avion dont les parois ont été volontairement omises ;
- la figure 2 est une vue en perspective, prise de trois quarts arrière, qui illustre notamment l'attache arrière et le moyen de reprise des efforts interposés entre la voilure et la région arrière de la partie arrière du mât, selon un premier mode de réalisation de l'invention ;
- la figure 3 est une vue en perspective, prise de trois quarts avant, qui représente l'attache avant interposée entre la voilure et la région avant de la partie arrière du mât ;
- la figure 4 est une vue en perspective, prise de dessus et de trois quarts avant, qui représente une variante de l'attache avant ;
- la figure 5 est une vue en perspective éclatée qui illustre un deuxième mode de réalisation de l'attache arrière selon l'invention ;
- la figure 6 est une vue en perspective éclatée qui illustre un perfectionnement au deuxième mode de réalisation de l'attache arrière selon l'invention ; et
- la figure 7 est une vue en coupe qui représente une variante du perfectionnement illustré sur la figure 6.

### Description détaillée de modes de réalisation préférés de l'invention

Par convention, on appelle X une direction correspondant à l'axe longitudinal du moteur ou de l'aéronef, Y une direction orientée transversalement par rapport à l'aéronef et Z la direction verticale, ces trois directions étant orthogonales entre elles.

Sur les figures, la référence 10 désigne de façon générale un mât d'accrochage réalisé conformément à l'invention. Ce mât 10 est monté sous une voilure 12 d'un aéronef par des premiers moyens d'accrochage 14. Un moteur 16 est suspendu au mât 10 par des deuxièmes moyens d'accrochage (non représentés).

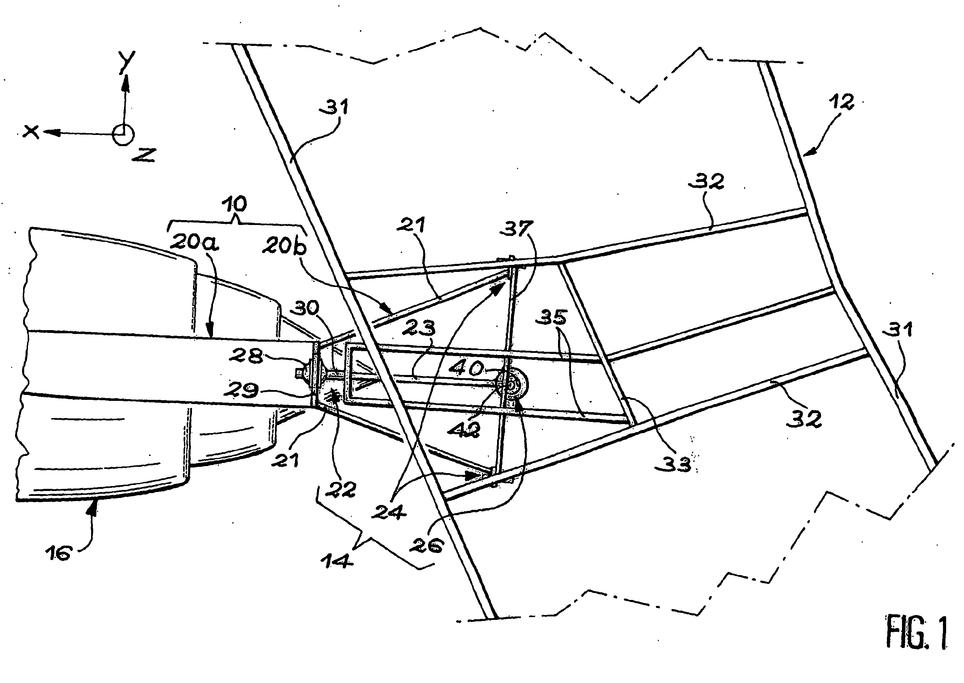

Comme l'illustre plus précisément la figure 1, la structure rigide du mât 10 comprend une partie avant 20a de largeur sensiblement constante et une partie arrière 20b dont la largeur augmente sensiblement, de manière progressive, en allant vers l'arrière. Ainsi, la largeur de la partie arrière 20b passe d'une valeur sensiblement égale à celle de la partie avant dans sa région avant à une valeur au moins double de celle-ci dans sa région arrière.

La partie avant 20a du mât 10 est située pour l'essentiel au-dessus du moteur 16 et la partie arrière 20b est située pour l'essentiel en dessous de la voilure 12.

La structure rigide du mât 10 est formée de façon conventionnelle par un assemblage de longerons et de nervures, agencés de façon à assurer la transmission des efforts entre le moteur 16 et la voilure 12 successivement au travers des deuxièmes moyens d'accrochage (non représentés) et des premiers moyens d'accrochage 14. Cet agencement des longerons et des nervures est réalisé par l'homme du métier à partir de ses connaissances ordinaires. Il ne fait pas partie de l'invention et il n'en sera fait aucune description détaillée.

Pour la bonne compréhension de la description des premiers moyens d'accrochage 14, il est simplement précisé que, dans le mode de réalisation représenté, la partie arrière 20b de la structure rigide du mât 10 comprend deux longerons latéraux 21, un longeron central 23, une nervure avant 25 et une nervure arrière 27. Les longerons latéraux 21 forment les parois latérales de la partie arrière 20b. Le longeron central 23 est situé dans le plan vertical XZ passant par l'axe longitudinal du moteur 16. Enfin, les nervures avant 25 et arrière 27 sont situés dans des plans transversaux YZ respectivement à la jonction avec la partie avant 20a et à l'arrière du mât 10.

La partie arrière 20b de la structure rigide du mât 10 comprend aussi un longeron supérieur horizontal, en forme de plaque, qui n'est pas illustré sur les figures, pour en faciliter la lecture. Pour la même raison, l'enveloppe extérieure du mât n'est pas non plus illustrée sur les figures.

De façon comparable, on n'a représenté sur les figures que la structure interne de la voilure 12, c'est-à-dire que le revêtement de celle-ci a été volontairement omis. Ainsi, dans la partie de la voilure 12 qui supporte le moteur 10, on voit que cette structure interne comprend des longerons avant et arrière 31, deux nervures longitudinales 32 reliant entre eux les longerons avant et arrière 31, une nervure transversale 33 reliant entre elles les nervures longitudinales 32, parallèlement aux longerons 31, deux nervures intermédiaires 35 reliant le longeron avant 31 à la nervure transversale 33, dans un plan XZ et une nervure transversale intermédiaire 37 reliant entre elles les deux nervures intermédiaires 35, dans un plan YZ. A ces éléments habituels de la structure interne de la voilure sont ajoutées deux nervures supplémentaires reliant les nervures intermédiaires 35 aux nervures longitudinales 32 dans le plan YZ contenant la nervure transversale intermédiaire 37. Dans un souci de clarté, la nervure transversale intermédiaire 37 et ces deux nervures supplémentaires sont désignées par la même référence numérique 37.

Les premiers moyens d'accrochage 14 comprennent une attache avant 22, une attache arrière 24 et un moyen 26 de reprise des efforts.

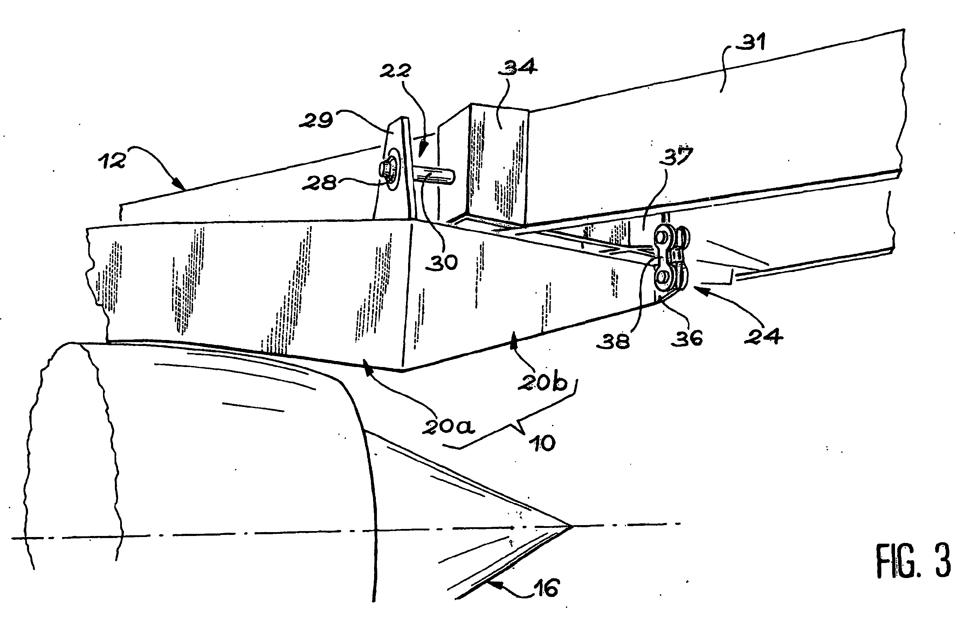

Dans le mode de réalisation illustré sur les figures 1 et 3, l'attache avant 22 comprend une ferrure avant 29 qui est située dans le prolongement de la nervure avant 25 du mât 10 et fait partie intégrante de ladite ferrure. Plus précisément, la ferrure avant 29 fait saillie vers le haut dans un plan YZ, à partir d'une région avant de la partie arrière 20b du mât 10. Elle supporte une rotule 28 dont l'axe est orienté selon la direction longitudinale X.

L'attache avant 22 comprend également un axe de montage 30, qui est fixé au longeron avant 31 de la voilure 12. Plus précisément, l'axe de montage 30 est fixé sur la face avant du longeron avant 31 de l'aile, par l'intermédiaire d'une console 34, de façon à faire saillie vers l'avant selon la direction longitudinale X. L'axe de montage 30 traverse sans jeu la rotule 28 portée par la ferrure 29, de façon à assurer notamment la transmission, entre le mât 10 et la voilure 12, des efforts orientés selon la direction verticale Z et selon la direction transversale Y.

Il est à noter que l'attache avant 22 est logée intégralement à l'intérieur du revêtement (non représenté) de la voilure, de telle sorte que la partie inférieure de la ferrure 29 traverse la région d'intrados de celui-ci. Des éléments d'étanchéité tels que des joints à lèvres sont avantageusement prévus pour fermer l'interstice ainsi ménagé entre la ferrure 30 et le revêtement de la voilure.

Cet agencement de l'attache avant 22 permet de placer verticalement le mât 10 au plus près de la voilure 12, ce qui favorise l'implantation d'un moteur 16 de plus grand diamètre.

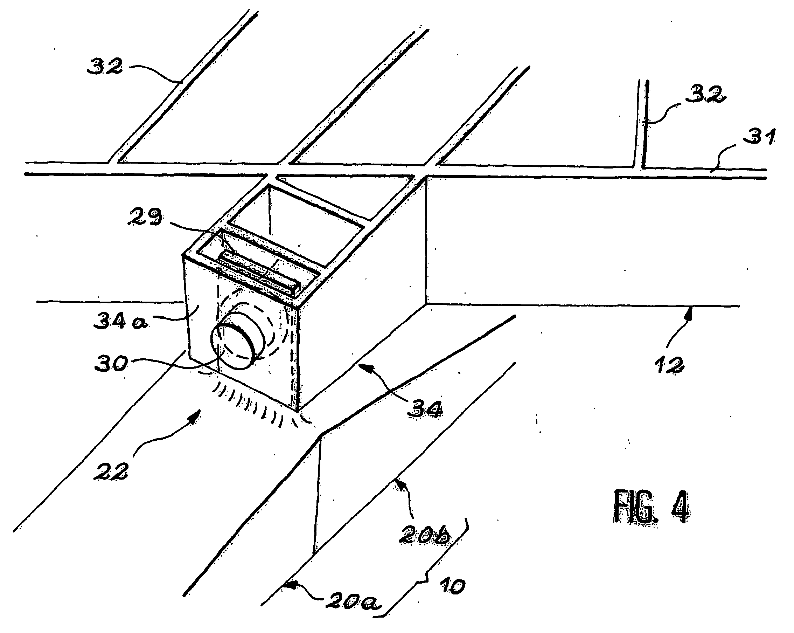

Dans la variante de réalisation illustrée sur la figure 4, la console 34 comporte une partie 34a située en avant de la ferrure 29, de manière à supporter l'axe 30 de part et d'autre de la rotule 28.

L'attache arrière 24 comprend deux ferrures arrière 36 fixées, par exemple par boulonnage, de part et d'autre du mât 10, dans une région arrière de sa partie arrière 20b. Les ferrures arrière 36 peuvent notamment être fixées sur le longeron supérieur horizontal (non représenté) qui relie entre elles les nervures 21, 23, 25 et 27. Plus précisément, les ferrures arrière 36 font saillie de part et d'autre du mât 10 selon la direction transversale Y, à proximité immédiate de la face supérieure du mât et dans le prolongement de la nervure arrière 27 de la structure rigide du mât.

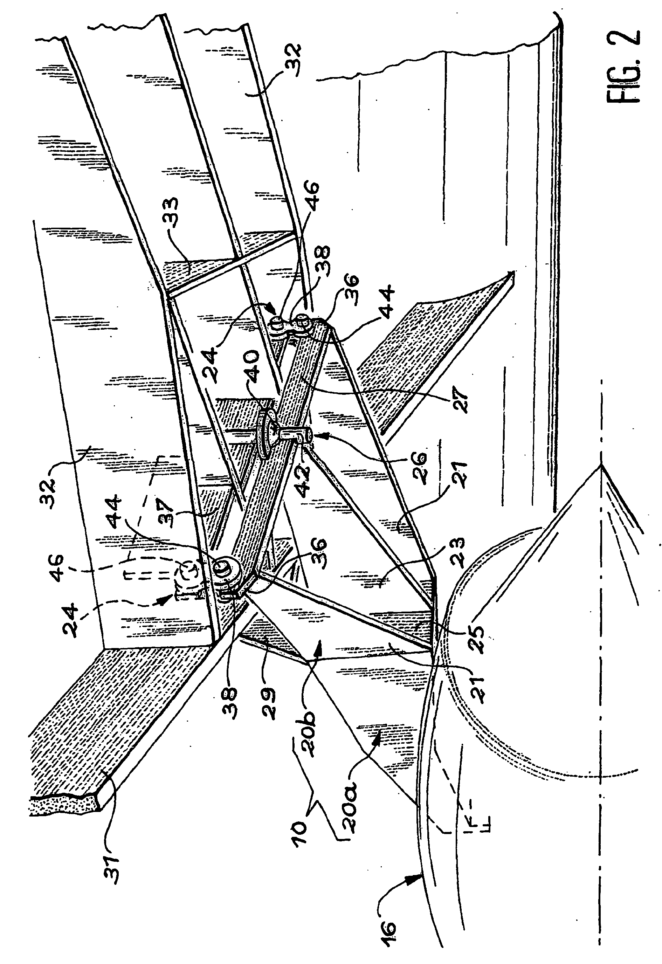

En plus de la ferrure arrière 36, chacune des attaches arrière 24 comprend un élément de jonction qui relie chacune des ferrures arrière 36 à une partie structurale de la voilure 12, constituée dans ce cas par la nervure transversale intermédiaire 37. Un premier mode de réalisation de cet élément de jonction va à présent être décrit en se référant aux figures 2 et 3.

Dans ce premier mode de réalisation, l'élément de jonction de chaque attache arrière 24 comprend une manille 38, de préférence double, qui relie la ferrure 36 à la voilure 12. De façon plus précise, chacune des manilles 38 est orientée sensiblement selon la direction verticale Z et relie l'une des ferrures arrières 36 à la nervure transversale intermédiaire 37, à proximité des nervures longitudinales 32. Les manilles 38 sont situées dans un même plan YZ et sont articulées respectivement sur les ferrures 36 et sur la nervure 37 par des premiers axes d'articulation 44 et par des deuxièmes axes d'articulation 46 orientés selon la direction longitudinale X du moteur.

Chacune des manilles 38 constitue, avec les axes d'articulation 44 et 46 par lesquels elle est articulée sur les ferrures 36 et sur la nervure 37, l'un des éléments de jonction précités.

En variante, les ferrures 36 et les manilles 38 peuvent aussi être situées dans des plans XZ parallèles l'un à l'autre.

Cet agencement permet à l'attache arrière 24 de transmettre à la voilure 12 une partie des efforts en provenance du moteur 16, orientés selon la direction verticale Z.

Il est à noter que les manilles 38 traversent le revêtement d'intrados de la voilure 12, pour venir s'articuler sur la nervure transversale intermédiaire 37. Des éléments d'étanchéité tels que des joints à lèvres sont avantageusement prévus pour fermer l'interstice ainsi ménagé entre les manilles et l'enveloppe de la voilure.

Cet agencement de l'attache arrière 24 permet de placer verticalement le mât 10 au plus près de la voilure 12, ce qui favorise l'implantation d'un moteur 16 de plus grand diamètre.

Comme l'illustrent également les figures 1 et 2, dans le mode de réalisation représenté, le moyen 26 de reprise des efforts comprend une rotule 40, fixée au mât 10, ainsi qu'un pion de cisaillement 42 fixé à la voilure 12.

De façon plus précise, la rotule 40 est fixée au longeron supérieur horizontal (non représenté) qui relie entre elles les nervures 21, 23, 25 et 27 matérialisant la structure rigide du mât 10, dans un plan vertical XZ passant par l'axe longitudinal du moteur 16. Le pion de cisaillement 42 est fixé à la nervure transversale intermédiaire 37 de la voilure et fait saillie vers le bas selon la direction verticale Z. Enfin, la rotule 40 est traversée par un alésage orienté selon la direction verticale Z et dans lequel le pion de cisaillement 42 est reçu sans jeu.

Cet agencement permet au moyen 26 de reprise des efforts de transmettre à la voilure 12 une partie des efforts en provenance du moteur 16 et orientés selon les directions X et Y.

Comme le montre notamment la figure 1, les deux éléments de jonction de l'attache arrière 24 sont agencés de préférence de façon dissymétrique par rapport au plan vertical XZ passant par l'axe longitudinal du moteur 16 et par le moyen 26 de reprise des efforts. Plus précisément, la distance qui sépare ce plan vertical XZ de l'élément de jonction extérieur par rapport à l'aéronef (vers le bas sur la figure 1) est plus petite que la distance qui sépare le plan vertical XZ de l'élément de jonction intérieur par rapport à l'aéronef (vers le haut sur la figure 1).

En résumé, dans l'agencement qui vient d'être décrit à titre d'exemple en référence aux figures 1 à 3, les efforts exercés par le moteur. 16 selon la direction longitudinale X sont transmis à la voilure 12 par le moyen 26 de reprise de poussée, les efforts exercés par le moteur 16 selon la direction transversale Y sont transmis à la voilure 12 conjointement par le moyen 26 de reprise de poussée et par l'attache avant 22 et les efforts exercés par le moteur 16 selon la direction verticale Z sont transmis à la voilure 12 conjointement par les attaches avant 22 et arrière 24.

En outre, le moment selon l'axe longitudinal X est repris par l'attache arrière 24 sous la forme de deux efforts orientés en sens opposés selon l'axe vertical Z, le moment selon l'axe transversal Y est repris conjointement par les attaches avant 22 et arrière 24 sous la forme d'efforts exercés selon l'axe vertical Z, et le moment selon l'axe vertical Z est repris par l'ensemble moyen 26 de reprise des efforts, attache avant 22, sous la forme d'efforts orientés selon la direction transversale Y.

Ainsi, une augmentation d'environ un tiers de la masse du moteur se traduirait en moyenne par une légère diminution des charges transmises par chacun des éléments du dispositif d'accrochage, dans les conditions normales de vol.

D'autre part, malgré l'augmentation de diamètre qui accompagne l'accroissement de la masse du moteur, l'agencement décrit permet de maintenir une garde au sol acceptable sans engendrer de modifications importantes de la voilure.

Dans le premier mode de réalisation de l'invention, qui vient d'être décrit en se référant aux figures 1 à 3, l'attache arrière 24 comprend deux éléments de jonction dont chacun comprend une manille dont la partie haute est logée dans un évidement formé dans la voilure et qui traverse le revêtement d'intrados de celle-ci. Cet agencement a pour conséquence une augmentation de la complexité et du coût de la voilure, l'apparition de problèmes d'étanchéité du réservoir de carburant intégré dans la voilure et une diminution de la capacité de ce réservoir.

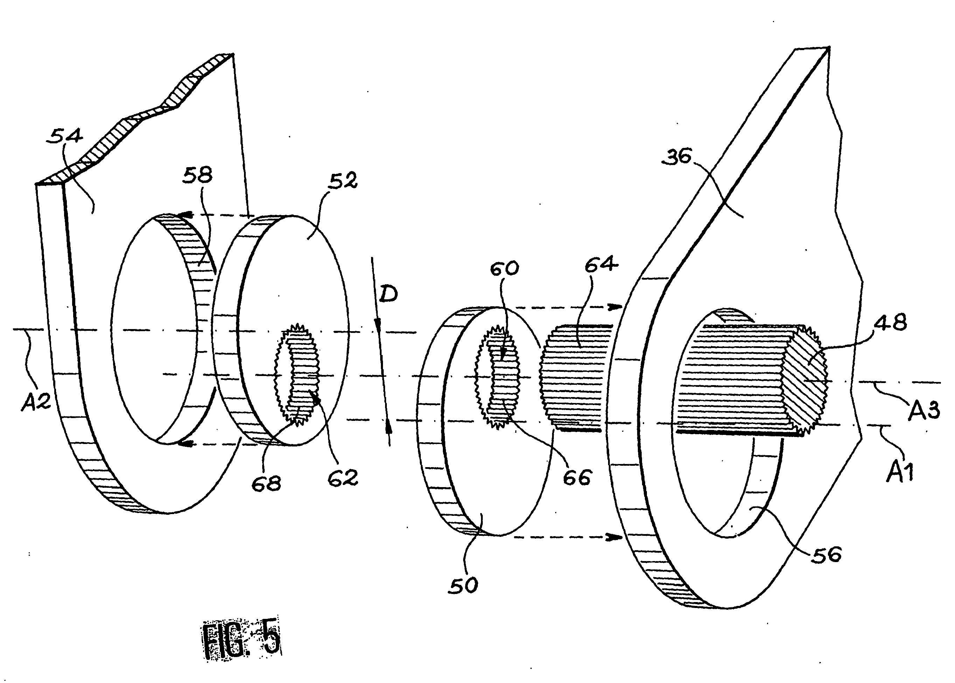

Ces inconvénients sont supprimés dans le deuxième mode de réalisation de l'invention qui va à présent être décrit en se référant à la figure 5.

Dans ce deuxième mode de réalisation de l'invention, les manilles sont supprimées et chacun des éléments de jonction comprend un axe d'articulation unique 48, une première pièce 50 en forme de disque et une deuxième pièce 52 en forme de disque, généralement identique à la première.

De façon plus précise, la première pièce 50 en forme de disque est montée dans un trou cylindrique 56 traversant l'une des ferrures arrière 36 selon un premier axe A1 orienté selon une direction longitudinale du moteur, de telle sorte que la première pièce 50 peut tourner librement autour de ce premier axe.

De façon comparable, la deuxième pièce 52 en forme de disque est montée dans un trou cylindrique 58 qui traverse une patte matérialisant le support 54 selon un deuxième axe A2 orienté selon une direction longitudinale du moteur, de telle sorte que la deuxième pièce 52 peut tourner librement autour de ce deuxième axe. Plus précisément, la patte matérialisant le support 54 est fixée à la partie structurale de la voilure et fait saillie vers le bas sous le revêtement d'intrados de celle-ci, sans qu'il existe une quelconque ouverture ou fente dans ce revêtement. Le deuxième axe A2 est parallèle au premier axe A1. En outre, le deuxième axe A2 est décalé verticalement vers le haut par rapport au premier axe A1 d'une distance D qui peut être légèrement supérieure, sensiblement égale ou même inférieure au diamètre de l'axe d'articulation 48.

L'axe d'articulation 48 a un diamètre sensiblement inférieur à celui des pièces 50 et 52. Il traverse des trous cylindriques 60 et 62 usinés respectivement dans la première pièce 50 en forme de disque et dans la deuxième pièce 52 en forme de disque. Plus précisément, l'axe A3 commun aux trous cylindriques 60 et 62 et à l'axe d'articulation 48 est excentré par rapport aux axes respectifs A1 et A2 des pièces 50 et 52.

L'agencement qui vient d'être décrit en se référant à la figure 5 permet de réduire la hauteur des éléments de jonction de l'attache arrière 24 qui relient la voilure et la structure rigide du mât, par rapport au premier mode de réalisation décrit. Par conséquent, pour une distance entre le mât et le dessous de la voilure sensiblement identique à celle de ce premier mode de réalisation, il n'est pas nécessaire d'aménager des évidements dans la voilure pour y loger les éléments de jonction.

De préférence et comme on l'a représenté schématiquement sur la figure 5, des moyens anti-rotation sont prévus entre l'axe d'articulation 48 et chacune de pièces 50 et 52 en forme de disque. Ces moyens anti-rotation comprennent, par exemple, des dentures ou des cannelures 64 formées sur la surface périphérique de l'axe d'articulation 48, en prise sur des dentures ou des cannelures complémentaires 66 et 68 formées respectivement dans les trous cylindriques 60 et 62.

Ce dernier agencement permet de supprimer un degré de liberté dans la liaison ainsi obtenue entre le mât et le support 54 fixé sous la voilure.

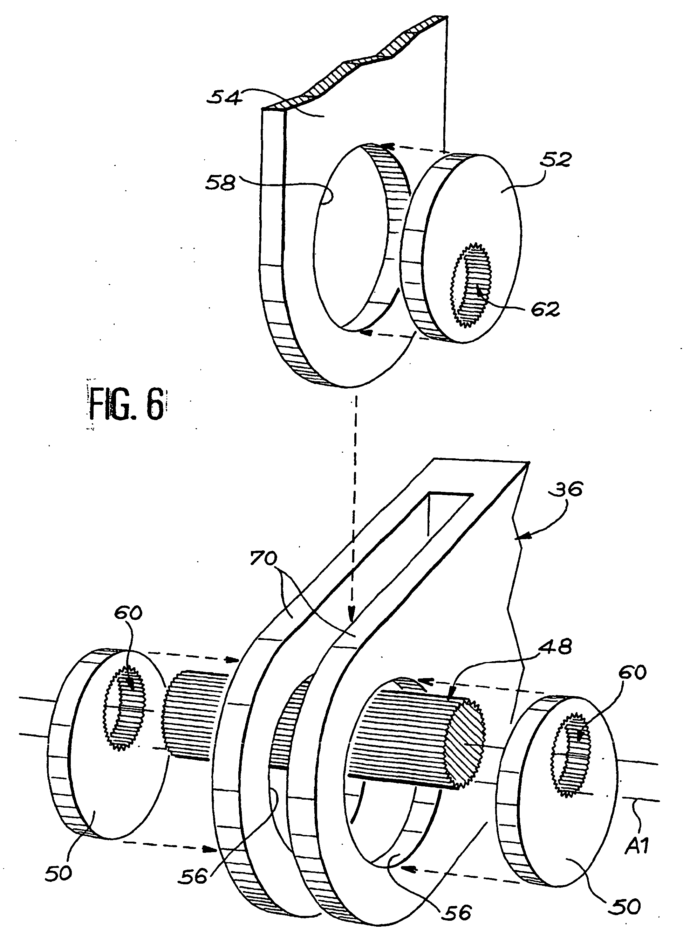

La figure 6 illustre une variante du deuxième mode de réalisation de l'invention, dans laquelle chacune des deux ferrures arrière 36 de l'attache arrière 24 a la forme d'une chape en U. Plus précisément, la ferrure 36 illustrée sur la figure 6 comprend deux plaques planes 70, parallèles entre elles. Dans ce cas, un trou cylindrique 56 est usiné dans chacune des plaques 70, de telle sorte que les deux trous 56 soient centrés sur le même axe A1.

Chacun des trous cylindriques 56 reçoit alors une pièce 50 en forme de disque, traversée par un trou cylindrique 60 dont le diamètre est le même que celui de l'axe d'articulation 48.

Dans ce cas, la patte matérialisant le support 54 est placée entre les plaques parallèles 70 de la ferrure arrière 36, avec la pièce en forme de disque 52 reçue de façon tournante dans le trou cylindrique 58, comme dans le mode de réalisation de la figure 5.

L'axe d'articulation 48 traverse alors simultanément chacun des trous cylindriques 60 et 62 formés respectivement dans les deux pièces en forme de disque 50 et dans la pièce en forme de disque 52. L'axe d'articulation 48 assure ainsi la liaison entre la ferrure arrière 36 du mât 10 et le support 54. La cohésion de cette liaison peut notamment être assurée par des flasques, écrous, etc. placés aux extrémités de l'axe d'articulation 48.

Comme dans le mode de la figure 5, des moyens anti-rotation tels que des cannelures peuvent être prévus entre l'axe d'articulation 48 et les trous cylindriques 60 et 62 dans lesquels cet axe est reçu. On supprime ainsi un degré de liberté dans la liaison prévue entre le mât 10 et le support 54 fixé sous la voilure.

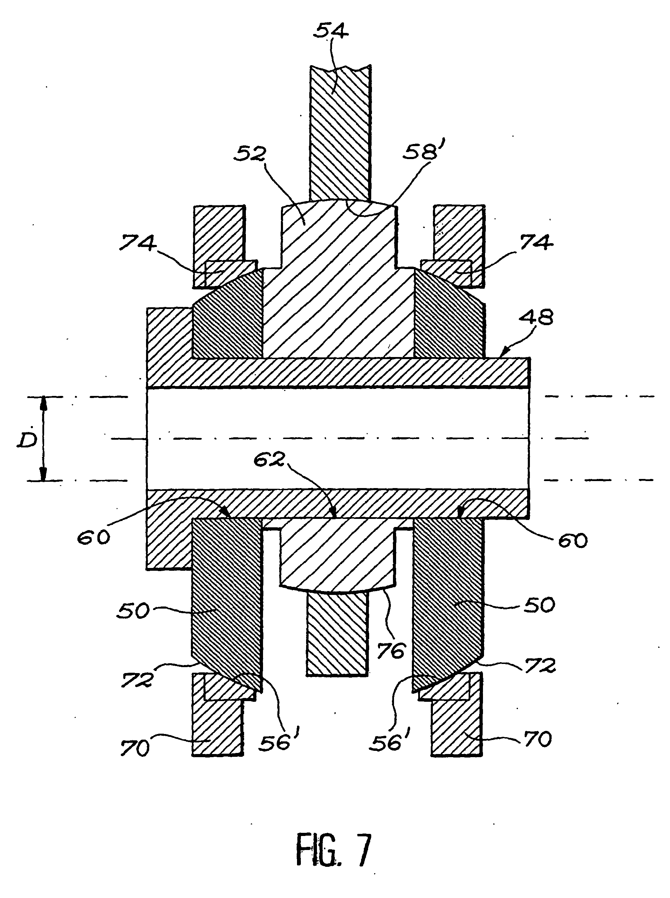

Sur la figure 7, on a représenté un perfectionnement à la variante de réalisation qui vient d'être décrite en référence à la figure 6.

Dans ce cas, une fonction "rotule" est ajoutée à chacun des éléments de jonction par lesquels chacune des ferrures arrière 36 est reliée à la partie structurale de la voilure

De façon plus précise, chacune des pièces en forme de disque 50 montées dans les plaques 70 de la ferrure arrière 36 présente une surface périphérique 72 en forme de portion de sphère. Des pièces intermédiaires 74 formant cages de rotule sont montées dans chacune des plaques 70, pour y définir des surfaces intérieures 56' en forme de portions de sphère. Ces surfaces intérieures sont complémentaires des surfaces périphériques 72 des pièces en forme de disque 50 et présentent un centre de rotation commun. Ainsi, lorsque les pièces en forme de disque 50 sont reçues dans les pièces intermédiaires 74, elles assurent une liaison de type rotule entre l'axe de pivotement 48 et la ferrure arrière 36.

De façon comparable, la pièce en forme de disque 52 présente une surface périphérique extérieure 76 en forme de portion de sphère, complémentaire d'une surface intérieure 58', en forme de portion de sphère, du support 54. Ainsi, lorsque la pièce en forme de disque 52 est reçue dans le support 54, les surfaces complémentaires 76 et 58' relient l'axe de pivotement 48 et le support 54 par une liaison de type rotule.

Comme on l'a illustré sur la figure 7, les deux liaisons de type rotule ainsi formées ont des centres qui sont décalés d'une distance D l'un par rapport à l'autre selon une direction verticale. Cette distance D est la même que dans le mode de réalisation de la figure 5 décrit précédemment. Elle peut être ajustée pour permettre l'implantation du support 54 intégralement en dessous de la voilure de l'aéronef.

Dans le perfectionnement qui vient d'être décrit en référence à la figure 7, seul un degré de liberté des éléments de jonction des attaches arrière est figé. En outre, la plus grande compacité du deuxième mode de réalisation de l'invention, par rapport au premier, s'accompagne aussi d'une réduction du poids.

Il est à noter que les modes de réalisation qui viennent d'être décrits à titre d'exemples concernent l'accrochage d'un mât sous une voilure présentant un certain type d'architecture structurale. Toutefois, l'invention n'est pas limitée à ce type de voilure et peut également être utilisée sur des aéronefs dont la voilure présente une architecture structurale de type différent. Dans ce cas, les éléments de jonction formant l'attache arrière et le pion de cisaillement 42 peuvent coopérer avec une partie structurale différente de la voilure.

## Revendications

1. Mât (10) d'accrochage d'un moteur (16) sous une voilure (12) d'aéronef, comprenant une structure rigide et des moyens d'accrochage de ladite structure rigide sous la voilure, lesdits moyens d'accrochage comportant une attache avant (22), une attache arrière (24) et un moyen (26) de reprise des efforts, **caractérisé en ce que** la structure rigide comprend une partie arrière (20b) ayant une largeur qui augmente sensiblement en allant vers l'arrière, l'attache arrière (24) comprenant deux ferrures arrière (36) fixées sur la structure rigide, de façon à faire saillie latéralement de part et d'autre de celle-ci, dans une région arrière de ladite partie arrière (20b), et au moins deux éléments de jonction reliant chacun l'une desdites ferrures arrière (36) à une partie structurale (37) de la voilure (12).

2. Mât selon la revendication 1, dans lequel chacun desdits éléments de jonction comprend un premier axe d'articulation, une manille (38) traversant un revêtement d'intrados de la voilure (12) et un deuxième axe d'articulation parallèle au premier, le premier axe d'articulation reliant l'une des ferrures arrière (36) à une extrémité inférieure de la manille et le deuxième axe d'articulation reliant une extrémité supérieure de la manille à ladite partie structurale (37) de la voilure (12).

3. Mât selon la revendication 2, dans lequel le premier axe d'articulation et le deuxième axe d'articulation sont orientés selon une direction longitudinale du moteur.

4. Mât selon la revendication 1, dans lequel chacun desdits éléments de jonction comprend un axe d'articulation (48), au moins une première pièce (50) montée dans l'une des ferrures arrières (36) de façon à pouvoir tourner autour d'un premier axe (A1) et une deuxième pièce (52) montée dans un support (54) fixé à la partie structurale de la voilure, sous un revêtement d'intrados de celle-ci, de façon à pouvoir tourner autour d'un deuxième axe (A2), l'axe d'articulation (48) traversant la première pièce (50) et la deuxième pièce (52), le premier axe (A1) et le deuxième axe (A2) étant parallèles entre eux, décalés verticalement l'un par rapport à l'autre et orientés selon une direction longitudinale du moteur.

5. Mât selon la revendication 4, dans lequel des moyens anti-rotation (64, 66, 68) sont prévus entre l'axe d'articulation (48) et chacune des première et deuxième pièces (50, 52), de façon à interdire toute rotation relative entre eux.

6. Mât selon l'une quelconque des revendications 4 et 5, dans lequel chacune des ferrures arrière (36) a la forme d'une chape en U comportant deux plaques parallèles (70) entre lesquelles est placé ledit support (54), une première pièce (50) étant montée dans chacune des plaques (70) de la ferrure arrière (36).

7. Mât selon la revendication 6, dans lequel deux premières pièces (50) sont montées respectivement dans chacune des deux plaques (70) de chaque ferrure arrière (36), lesdites premières pièces (50) coopérant avec les deux plaques (70) de la ferrure arrière (36) par des surfaces (72, 56') en forme de portions de sphères définissant entre les plaques (70) et lesdites pièces (50) une liaison de type rotule.

8. Mât selon la revendication 7, dans lequel des pièces intermédiaires (74) formant cages de rotule sont fixées dans chacune des deux plaques (70) de la ferrure arrière (36) et coopèrent par des surfaces intérieures (56') en forme de portions de sphères avec des surfaces extérieures (72) en forme de portion de sphères des premières pièces (50).

9. Mât selon l'une quelconque des revendications précédentes, dans lequel les éléments de jonction comprennent un élément de jonction extérieur et un élément de jonction intérieur par rapport à l'aéronef et l'élément de jonction extérieur est plus proche d'un plan vertical passant par un axe longitudinal du moteur (16) que l'élément de jonction intérieur.

10. Mât selon l'une quelconque des revendications précédentes, dans lequel ledit moyen (26) de reprise des efforts comprend une rotule (40) fixée à la partie arrière (20b) de la structure rigide, entre les deux ferrures arrière (36), et un pion de cisaillement (42) fixé à la voilure (12) et traversant ladite rotule (40).

11. Mât selon la revendication 10, dans lequel le pion de cisaillement (42) est fixé à ladite partie structurale (37) de la voilure (12) et situé dans un plan vertical passant par un axe longitudinal du moteur (16).

12. Mât selon l'une quelconque des revendications précédentes, dans lequel l'attache avant (22) comprend une ferrure avant (29) fixée à une région avant de ladite partie arrière (20b), et un axe de montage (30) de ladite ferrure avant (29) sur la voilure (12), ledit axe de montage (30) étant orienté selon une direction longitudinale.

13. Mât selon la revendication 12, dans lequel l'axe de montage (30) est fixé à un longeron avant (31) de la voilure.

## Patentansprüche

1. Mast zum Aufhängen (10) eines Triebwerks (16) unter einem Luftfahrzeug-Tragwerk (12), mit einer starren Struktur und Mitteln zum Aufhängen der starren Struktur unter dem Tragwerk, wobei die Aufhängungsmittel eine vordere Befestigung (22), eine hintere Befestigung (24) und ein Mittel (26) zur Aufnahme von Kräften aufweist, **dadurch gekennzeichnet, dass** die starre Struktur einen hinteren Abschnitt (20b) umfasst, der eine Breite hat, welche nach hinten merklich zunimmt, wobei die hintere Befestigung (24) zwei hintere Beschlagteile (36) umfasst, die an der starren Struktur derart befestigt sind, dass sie lateral an deren beiden Seiten in einem hinteren Bereich des hinteren Abschnitts (20b) vorstehen, wobei mindestens zwei Verbindungselemente jeden der hinteren Beschlagteile (36) mit einem strukturellen Abschnitt (37) des Tragwerks (12) verbinden.

2. Mast nach Anspruch 1, wobei jedes der Verbindungselemente eine erste Gelenkachse, einen eine Flügelunterseiten-Verkleidung des Tragwerks (12) durchsetzenden Schäkel (38) sowie eine zu der ersten (Gelenkachse) parallele zweite Gelenkachse umfasst, wobei die erste Gelenkachse eines der hinteren Beschlagteile (36) mit einem unteren Ende des Schäkels verbindet und die zweite Gelenkachse ein oberes Ende des Schäkels mit dem strukturellen Abschnitt (37) des Tragwerks (12) verbindet.

3. Mast nach Anspruch 2, wobei die erste Gelenkachse und die zweite Gelenkachse in einer Längsrichtung des Triebwerks ausgerichtet sind.

4. Mast nach Anspruch 1, wobei jedes der Verbindungselemente eine Gelenkachse (48), mindestens ein erstes, in einem der hinteren Beschlagteile (36) um eine erste Achse (A1) drehbar angebrachtes erstes Teil (50) sowie ein an einer an dem strukturellen Teil des Tragwerks unter dessen Flügelunterseiten-Verkleidung um eine zweite Achse (A2) drehbar angebrachtes zweites Teil (52) umfasst, wobei die Gelenkachse (48) das erste Teil (50) und das zweite Teil (52) durchsetzt, und die erste Achse (A1) und die zweite Achse (A2) untereinander parallel und vertikal zueinander versetzt und in einer Längsrichtung des Triebwerks ausgerichtet sind.

5. Mast nach Anspruch 4, wobei Anti-Rotationsmittel (64,66,68) zwischen der Gelenkachse (48) und jedem der ersten und zweiten Teile (50,52) derart vorgesehen sind, dass sie jegliche Rotation relativ zueinander verhindern.

6. Mast nach einem der Ansprüche 4 oder 5, wobei jeder der hinteren Beschlagteile (36) die Form eines U-förmigen Bügels aufweist, der zwei parallele Platten (70) umfasst, zwischen denen die Halterung (54) angeordnet ist, wobei ein erstes Teil (50) in jeder der Platten (70) des hinteren Beschlagteils (36) angebracht ist.

7. Mast nach Anspruch 6, wobei zwei erste Teile (50) jeweils in jeder der beiden Platten (70) jedes hinteren Beschlagteils (36) angebracht sind, und die ersten Teile (50) mit den zwei Platten (70) des hinteren Beschlagteils (36) über Oberflächen (72,56') in Form von Kugelabschnitten, die zwischen den Platten (70) und den Teilen (50) eine Kugelgelenkverbindung festlegen, zusammenwirken.

8. Mast nach Anspruch 7, wobei Zwischenteile (74), die Kugelgelenkkäfige bilden, in/an jeder der beiden Platten (70) des hinteren Beschlagteils (36) befestigt sind, und über Innenflächen (56') in der Form von Kugelabschnitten mit den Außenflächen (72) in der Form von Kugelabschnitten der ersten Teile (50) zusammenwirken.

9. Mast nach einem der vorangehenden Ansprüche, wobei die Verbindungselemente ein äußeres Verbindungselement und ein inneres Verbindungselement in Bezug auf das Luftfahrzeug aufweisen, und das äußere Verbindungselement näher an einer durch eine Längsachse des Triebwerks (16) hindurchgehenden Vertikalebene als das innere Verbindungselement liegt.

10. Mast nach einem der vorangehenden Ansprüche, wobei das Mittel (26) zur Aufnahme von Kräften ein an dem hinteren Abschnitt (20b) der starren Struktur zwischen den beiden hinteren Beschlagteilen (36) befestigtes Kugelgelenk (40) sowie ein an dem Tragwerk (12) befestigtes und das Kugelgelenk (40) durchsetzendes Abscherstück (42) umfasst.

11. Mast nach Anspruch 10, wobei das Abscherstück (42) an dem strukturellen Abschnitt (37) des Tragwerks (12) befestigt ist und in einer durch eine Längsachse des Triebwerks (16) hindurchgehenden Vertikalebene gelegen ist.

12. Mast nach einem der vorangehenden Ansprüche, wobei die vordere Befestigung (22) ein vorderes Beschlagteil (29), das an einem vorderen Bereich des hinteren Abschnitts (20b) befestigt ist, sowie eine Montageachse (30) des vorderen Beschlagteils (29) am Tragwerk (12) umfasst, wobei die Montageachse (30) in einer Längsrichtung ausgerichtet ist.

13. Mast nach Anspruch 12, wobei die Montageachse (30) an einem vorderen Längsträger (31) des Tragwerks befestigt ist.

## Claims

1. A strut (10) for hooking an engine (16) under a wing body assembly (12) of an aircraft, comprising a rigid structure and means of hooking said rigid structure under the wing body assembly, said hooking means comprising a front fastener (22), a rear fastener (24) and means (26) for absorbing forces, **characterised in that** the rigid structure comprises a rear part (20b) having a width which increases substantially, as it progresses to the rear, said rear fastener (24) comprising two rear braces (36) fixed to the rigid structure, so as to protrude laterally on both sides of the latter, in a rear region of said rear part (20b), and at least two joining elements connecting each one of said rear braces (36) to a structural part (37) of the wing body assembly (12).

2. The strut as claimed in Claim 1, in which each of said joining elements comprises a first hinge pin, a shackle (38) passing through a lower wing surface covering of the wing body assembly (12) and a second hinge pin parallel to the first, the first hinge pin connecting one of the rear braces (36) to an inner end of the shackle and the second hinge pin connecting an upper end of the shackle to said structural part (37) of the wing body assembly (12).

3. The strut as claimed in Claim 2, in which the first hinge pin and the second hinge pin are oriented according to a longitudinal direction of the engine.

4. The strut as claimed in Claim 1, in which each of said joining elements comprises a hinge pin (48), at least a first piece {50) mounted in one of the rear braces (36) so as to be able to pivot about a first axis (A1) and a second piece (52) mounted in a support (54) fixed to the structural part of the wing body assembly, under a lower wing surface covering of the latter, so as to be able to pivot about a second axis (A2), the hinge pin (48) passing through the first piece (50) and the second piece (52), the first axis (A1) and the second axis (A2) being parallel to one another, offset vertically relative to one another and oriented in a longitudinal direction of the engine.

5. The strut as claimed in Claim 4, in which anti-rotation means (64, 66, 68) are provided between the hinge pin (48) and each of the first and second pieces (50, 52), so as to prohibit any relative rotation between them.

6. The strut as claimed in any one of Claims 4 and 5, in which each of the rear braces (36) is in the form of a U-shaped cap comprising two parallel plates (7b) between which is placed said support (54), a first piece (50) being mounted in each of the plates (70) of the rear brace (36).

7. The strut as claimed in Claim 6, in which two first pieces (50) are mounted respectively in each of the two plates (70) of each rear brace (36), said first pieces (50) cooperating with the two plates (70) of the rear brace (36) by surfaces (72, 56') in the form of a segment of a sphere defining between the plates (70) and said pieces (50) a linkage of a pot-type joint.

8. The strut as claimed in Claim 7, in which intermediate pieces (74) forming pot-type joint cages are fixed in each of the two plates (70) of the rear brace (36) and cooperate via internal surfaces (56') in the form of a segment of a sphere with external surfaces (72) in the form of a segment of a sphere of the first pieces (50).

9. The strut as claimed in any one of the preceding claims, in which the joining elements comprise an external joining element and an internal joining element relative to the aircraft and the external joining element is closer to a vertical plane passing through a longitudinal axis of the engine (16) than the internal joining element.

10. The strut as claimed in any one of the preceding claims in which said means (26) for absorbing forces comprise a pot-type joint (40) fixed at the rear part (20b) of the rigid structure, between the two rear braces (36), and a shearing pion (42) fixed to the wing body assembly (12) and traversing said pot-type joint (40).

11. The strut as claimed in Claim 10, in which the shearing pion (42) is fixed to said structural part (37) of the wing body assembly (12) and located in a vertical plane passing through a longitudinal axis of the engine (16).

12. The strut as claimed in any one of the preceding claims, in which the front fastener (22) comprises a front brace (29) fixed to a front region of said rear part (20b), and a mounting axis (30) of said front brace (29) on the wing body assembly (12), said mounting axle (30) being oriented in a longitudinal direction.

13. The strut as claimed in Claim 12, in which the mounting axle (30) is fixed to a front longeron (31) of the wing body assembly.
